# EUROPEAN PATENT SPECIFICATION

(11) **EP 3 075 888 B1**
(45) Date of publication and mention of the grant of the patent: **25.12.2019**
(21) Application number: 15181409.2
(22) Date of filing: 18.08.2015
(51) Int. Cl.: D01D 5/24, D01D 5/18, D01D 5/34, D01F 1/10, D01F 9/10, B01D 69/08, B01D 71/02, B01D 71/34, B01D 71/36, B01D 71/68, B29C 48/11

(54) **MULTI-CHANNEL HOLLOW FIBER**
MEHRKANAL-HOHLFASER
FIBRE CREUSE MULTICANAL

(30) Priority: 31.03.2015 TW 104110409
(43) Date of publication of application: 05.10.2016
(73) Proprietor: Industrial Technology Research Institute, Hsinchu Hsien (TW)
(72) Inventor: TAI, Chin-Chih, 31040 Hsinchu (TW); WANG, Yun-Hsin, 31040 Hsinchu (TW)
(74) Representative: Kotitschke, Ralf Thomas

(56) References cited:
- CN-A- 1 508 300
- US-A1- 2003 141 238
- US-A1- 2013 256 214
- US-A1- 2014 166 571
- US-A1- 2014 170 256

## Description

### CROSS-REFERENCE TO RELATED APPLICATION

This application claims the priority benefit of Taiwan application serial no. 104110409, filed on March 31, 2015.

### BACKGROUND

### 1. Technical Field

The present disclosure relates to a multi-channel hollow fiber, and especially relates to a hollow fiber that can be used as adsorption material or filtration membrane.

### 2. Description of Related Art

Commercial adsorption materials, in practical application, are based on the pellets or granules prepared by the conventional granulation and extrusion. After the completion of adsorption or the termination of the reaction, the regeneration process of the adsorption material takes over several hours through thermal desorption and temperature reduction. Another common desorption method is pressure-swing adsorption, which must be operated at high pressures due to the high transmitted resistance and the high pressure difference of the adsorption materials. Accordingly, both of the above desorption methods incur additional material costs and energy consumption.

In addition, in term of the adsorption efficiency and property, the adsorption capacity of the single straight channel hollow fiber adsorption materials is 2 to 3 times more efficient than that of the conventional granulated adsorption materials. Such single straight channel hollow fiber adsorption materials also have the property of low mass transfer resistance, so that the pressure drop thereof is less than that of the conventional packed column more than 100 times. However, when the single straight channel hollow fiber adsorption materials is applied to adsorb gas or liquid at high flow velocity, the time allowing the contacts between gas/liquid and adsorption materials and the transmission path are decreased due to the low pressure drop of such adsorption materials. Hence, currently, such adsorption materials cannot rashly replace the application of the conventional adsorption granular materials. Meanwhile, when applying phase-inversion process to the straight channel hollow fiber adsorption materials, the solid content and density of the adsorption materials are on the low side. Even though the industry currently uses adhesives to enhance the solid content and density of the adsorption materials in adsorption wheel or monolith, the use of adhesives may lead to a great resistance for the gas or liquid transmission. In addition, the excessive solid content of the straight channel hollow fiber adsorption materials decreases the mechanical strength of adsorption material.

Therefore, in this respect, the problem to be desperately solved is to enhance efficiency and mechanical strength of the hollow fibers.

### SUMMARY

According to one embodiment, a multi-channel hollow fiber is provided. The multi-channel hollow fiber comprises a tubular matrix having a first end and a second end; and a plurality of spiral channels formed through the tubular matrix and extending between the first end and the second end, wherein the pitch of each of the spiral channels is 1 to 30 cm.

According to another embodiment, the present disclosure provides another multi-channel hollow fiber, comprising a tubular matrix having a first end and a second end; and a plurality of channels formed through the tubular matrix and extending between the first end and the second end, wherein the shortest distance between each of the channels and the outer wall of the tubular matrix is from 0.5 to 2.5 mm, the diameter of the channel is from 0.1 to 10 mm, and the distance between any two adjacent ones of the channels is from 0.5 to 2.5 mm, so that the multi-channel hollow fiber is used for adsorption.

Turbulent flow of the gas or liquid molecules in the channel can be generated by applying the hollow fiber of the present disclosure, and it provides 2 to 4 times more transmission paths in comparison with the straight channel hollow fiber. Accordingly, the adsorption and separation efficiency of gas and liquid are enhanced and the length of the adsorption bed is shortened. Meanwhile, the content of the adsorbent in the plurality of channels of the hollow fiber can be increased to 95 wt% with the application of phase-inversion process. Also, because of the factor that the hollow fiber has a plurality of channels, the hollow fiber for the use of adsorption or filtration possesses high mechanical strength.

### BRIEF DESCRIPTION OF DRAWINGS

FIG. 1 is a schematic view showing a spinning device for the preparation of a hollow fiber;
FIG. 2 is a schematic view showing a spinning device for the preparation of a double-layer hollow fiber;
FIG. 3 is a schematic view showing a spinning device for the preparation of a triple-layer hollow fiber;
FIG. 4A is a cross-sectional view showing a hollow fiber in one embodiment;
FIG. 4B is a schematic view showing that the hollow fiber has a plurality of channels in the different aspects;
FIG. 4C is a cross-sectional view showing a hollow fiber having a first cladding layer;
FIG. 4D is a cross-sectional view showing a hollow fiber having a second cladding layer;
FIG. 5 is an adsorption breakthrough curve diagram of n-butane;
FIG. 6 is an adsorption breakthrough curve diagram of carbon dioxide;
FIG. 7 is an adsorption breakthrough curve diagram of water vapor;
FIG. 8 shows the result of desalination rate test of the hollow fiber of Preparation Example 16; and
FIG. 9 shows the result of water production rate test of the hollow fiber of Preparation Example 16.

### DETAILED DESCRIPTION OF DISCLOSED EMBODIMENTS

In the following detailed description, for purposes of explanation, numerous specific details are set forth in order to provide a through understanding of the disclosed embodiments. It will be apparent, however, that one or more embodiments may be practiced without these specific details. In other instances, well-know structures and devices are schematically shown in order to simplify the drawing.

It should be noted that the structures, proportions, sizes and the like shown in the attached drawings are to be considered only in conjunction with the contents of this specification to facilitate understanding and reading of those skilled in the art, and are not intended to limit the scope of present disclosure, thus they do not hold any real technically significance, and any changes or modifications in the structures, the proportions, the sizes and the like should fall within the scope of the technical contents disclosed in the present disclosure as long as they do not affect the effects and the objectives achieved by the present disclosure. Meanwhile, terms such as "a/an", "first", "second" and "third" used in this specification are used for illustration purposes only, and are not intended to limit the scope of the present disclosure in any way, any changes or modifications of the relative relationships of elements are therefore to be construed as within the scope of the present disclosure as long as there is no substantial changes to the technical contents.

The present disclosure provides a multi-channel hollow fiber, by forming a hollow fiber by using a spinneret; and rotating the spinneret during the process, thereby forming a plurality of channels in the hollow fiber after the hollow fiber is coagulated in a coagulation bath.

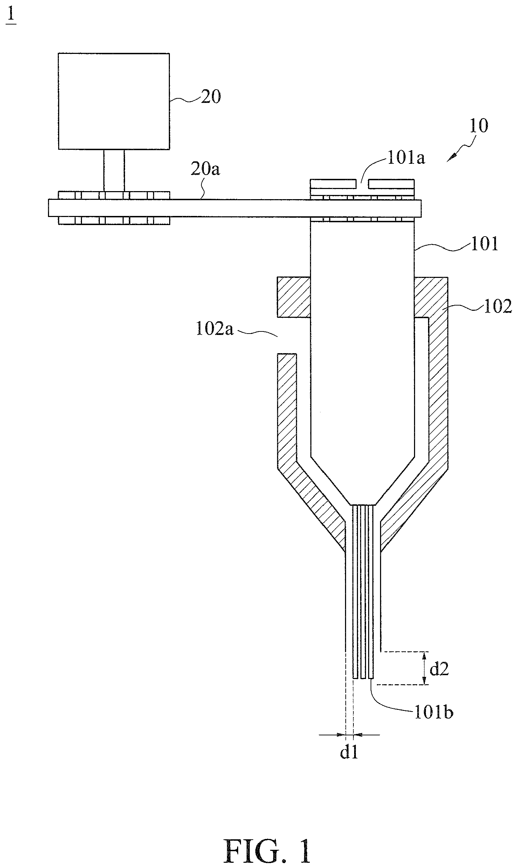

As shown in FIG. 1, a spinning device for the preparation of a hollow fiber in one embodiment is demonstrated. The spinning device 1 comprises a spinneret 10. The spinneret 10 has a tube body 101 and a sleeve 102 surrounding the tube body 101. A bore fluid and a first spinning dope are respectively injected into the tube body 101 and sleeve 102, for example, the bore fluid is injected through a feed inlet 101a, and the first spinning dope is injected through a feed inlet 102a. Further, a motor 20 is utilized to drive a transmission belt 20a, so as to rotate the spinneret 10.

According to the above description, the bore fluid passes through the tube body of the spinneret. The examples of the bore fluid include, but not limited to, water, methanol, ethanol, propanol, isopropanol, acetone, dimethyl acetamide (DMAc), 1-methyl-2-pyrrolidone (NMP), dimethyl formamide (DMF) and a mixture thereof.

Tο form a spiral channel, the spinneret is rotated to form the spiral channel when the bore fluid passes through the tube body. In one embodiment, if it is desired to prepare a multi-channel hollow fiber for adsorption, the first spinning dope comprises a polymer and adsorbent. Generally, the polymer is at least one selected from the group consisting of polysulfone (PSF), polyethersulfone (PESF), polyvinylidene fluoride (PVDF), polyphenylsulfone (PPSU), polyacrylonitrile, cellulose acetate, cellulose diacetate, polyimide (PI), polyetherimide, polyamide, polyvinyl acetate, polylactic acid, polyglycolic acid, poly(lactic-co-glycolic acid), polycaprolactone, polyvinyl pyrrolidone, ethylene vinyl alcohol (EVOH), polydimethylsiloxane, polytetrafluoroethylene and cellulose acetate (CA).

According to the above embodiment, the adsorbent is a powder form. A plurality of particles of the powder have particle sizes in the range of 0.005-500 µm with two-dimensional or three-dimensional pore structures in which the pores are in regular or irregular shapes. Alternatively, the adsorbent is a material which can attract or adsorb gas or liquid molecules. For example, the adsorbent is at least one selected from the group consisting of zeolite A (such as 3A, 4A or 5A), zeolite X (such as 10X), zeolite Y (such as 13X), high-silica molecular sieve (such as ZSM-5, silicalite, HISIV1000, HISIV3000, HISIV6000, ABSCENT1000, ABSCENT2000, ABSCENT3000, USKY-700, USKY-790 and USKZ2000) and meso-porous molecular sieve (such as MCM-41, 48, 50 and SBA-15). In addition, the adsorbent also can be carbon molecular sieve or activated carbon.

In one embodiment, the method of manufacturing a first spinning dope comprises placing a polymer into a 1 L glass bottle, then adding a solvent, wherein the solvent is capable of dissolving the polymer and is miscible with the bore fluid and the coagulant. The examples of the solvent include, but not limited to, DMAc, NMP, DMF, 1,4-dioxane, acetone and a mixture thereof. Further, the above mixture is placed in a drum mixer stirred at a rotating speed of 50-100 rpm for about 12 to 24 hours until the mixture is completely dissolved.

In an embodiment of the preparation of a multi-channel hollow fiber for adsorption, the weight ratio of the polymer to the solvent in the spinning dope is 1: 1 to 1: 8. In another embodiment, the weight ratio of the polymer to the solvent is 1: 4 to 1: 6.

In an embodiment of the preparation of a multi-channel hollow fiber for filtration, the weight ratio of the polymer to the solvent in the spinning dope is 1: 1 to 1: 8. More specifically, if the multi-channel hollow fiber for filtration contains an organic material, the weight ratio of the polymer to the solvent in the spinning dope may be 1: 1 to 1: 4. If the multi-channel hollow fiber for filtration contains an inorganic material carried out with sintering, the weight ratio of the polymer to the solvent in the spinning dope is 1: 1 to 1: 6.

Subsequently, under the condition of stirring the polymer and solvent, for example, at a rotating speed of 1000 to 3000 rpm, an adsorbent is slowly added and then stirred for 6 to 24 hours with well dispersion.

In an embodiment of the preparation of a multi-channel hollow fiber for adsorption, the weight ratio of the polymer to the adsorbent is from 1: 1 to 1: 20.

In an embodiment of the preparation of a multi-channel hollow fiber for filtration, when the multi-channel hollow fiber for filtration contains an organic material, at least one functional material selected from the group consisting of adsorbent, conducting material and catalytic material can be added into the spinning dope; and the content of the polymer is from 80 to less than 100 wt%, the content of the functional material is from greater than 0 to 20 wt%, based on the total weight of the polymer and functional material.

If the multi-channel hollow fiber for filtration is an inorganic material carried out with sintering, the content of the polymer is 5 to 35 wt% based on the total weight of the solid content in the spinning dope, and the remainder of the spinning dope is the added inorganic material. The added inorganic materials may comprise an adsorbent. If an adsorbent exists, the ratio of the adsorbent to the other inorganic materials is not particularly limited and may be from 1: 20 to 20: 1, and the total amount of the inorganic material and the adsorbent is from 65 to 95 wt% based on the total weight of the solid content in the spinning dope. The adsorbent is at least one selected from the group consisting of zeolite A, zeolite X, zeolite Y, high-silica molecular sieve and meso-porous molecular sieve; the inorganic material is at least one selected from the group consisting of iron oxide, copper oxide, barium titanate, lead titanate, aluminum oxide, silicon dioxide, silica aerogel, bentonite (such as potassium bentonite, sodium bentonite, calcium bentonite and aluminum bentonite), china clay (such as Al₂O₃ · 2SiO₂ · 2H₂O), hyplas clay (such as 20%Al₂O₃ · 70%SiO₂ · 0.8%Fe₂O₃ · 2.3%K₂O · 1.6%Na₂O), calcium silicate (such as Ca₃SiO₅, Ca₃Si₂O₇ and CaSiO₃), magnesium silicate (such as Mg₃Si₄O₁₀(OH)₂), sodium silicate (such as Na₂SiO₃ and hydrate thereof), sodium sulfate anhydrous, zirconium silicate (such as ZrSiO₄), opaque zircon (such as 53.89%SiO₂ · 4.46%Al₂O₃ · 12.93%ZrO₂ · 9.42%CaO · 2.03%MgO · 12. 96%ZnO · 3.73%K₂O · 0.58%Na₂O), silicon carbide, lead meta-silicate frit (such as 65%PbO · 35%SiO₂), lead sesquisilicate frit (such as 71.23%PbO · 28.77%SiO₂), low-expansion frit (such as 0.1%Li₂O · 3.6%CaO · 3.3%ZnO · 2.4%MgO · 8.2%Al₂O₃ · 63.6%SiO₂ · 17.8%B₂O₃), soft borax frit (such as 10.3%(Li₂O+Na₂O+K₂O) · 14%(CaO+MgO) · 3.3%ZnO · 7.5%Al₂O₃ · 50 %SiO₂ · 18%B₂O₃) and standard borax frit (such as 14.22%CaO · 0.16%MgO · 1.56%K₂O · 9.01%Na₂O · 7.63%Al₂O₃ · 49.4 5%SiO₂ · 17.93%B₂O₃).

In addition, the above catalytic material may be one of the metallic elements or metal oxides having catalytic activities, such as a metallic element having catalytic activities selected from cobalt, palladium, platinum, ruthenium, rhodium and so on, and a metal oxide having catalytic activities selected from iron oxide, copper oxide, barium titanate, lead titanate, aluminum oxide, cerium dioxide, boron oxide and so on.

According to the above embodiment, the prepared mixture is placed in a drum mixer and then stirred at a rotating speed of 50 to 100 rpm followed by degassed for 24 to 48 hours, thereby a first spinning dope is formed.

In addition, in the embodiment shown by FIG. 1, the tube body 101 has at least three nozzles 101b formed along the axial direction of the tube body 101. Each of the nozzles 101b is spaced symmetrically relative to the aperture of the tube body 101. As such, when it is desired to prepare a multi-channel hollow fiber for adsorption, it might very well lead to the failed spinning process, such as perforation, if the shortest distance between the nozzles 101b and the inner wall of the sleeve 102 is too short; in contrary, if the shortest distance is too long, the transfer resistance to gas or liquid may be too high and thereby leading to the poor efficiency for adsorption or separation. Therefore, the shortest distance between the inner wall of the sleeve 102 and the outer wall of the nozzles 101b is 0.5 to 2.5 mm, that is, the distance d1 between the inner wall of the sleeve 102 and a position of the nozzle which is closest to the inner wall of the sleeve 102 is from 0.5 to 2.5 mm. Furthermore, the distance between any two adjacent ones of the nozzles is from 0.5 to 2.5 mm. On the other hand, if it is desired to prepare a hollow fiber for filtration, the distance d1 between the inner wall of the sleeve 102 and a position of the nozzle which is closest to the inner wall of the sleeve 102 is from 0.1 to 1.0 mm. Further, the distance between any two of the adjacent nozzles is from 0.1 to 1.0 mm.

The first spinning dope injected into the sleeve 102 encircles the bore fluid sprayed separately from at least three nozzles 101b, thereby forming a hollow fiber when the bore fluid and the first spinning dope depart from the spinneret 10.

In one embodiment, to coagulate the hollow fiber, a container contained a coagulant may be provided, such that the hollow fiber can be coagulated in the coagulation bath, wherein the coagulant is selected from water, methanol, ethanol, propanol, isopropanol, acetone, dimethyl acetamide (DMAc), 1-methyl-2-pyrrolidone (NMP), dimethyl formamide (DMF) and a mixture thereof. Finally, the hollow fiber is collected and dried, thereby forming the multi-channel hollow fiber.

In the above manufacturing method, the motor 20 is utilized to drive transmission belt 20a, so as to rotate the spinneret 10 at a rotating speed of 10 to 30 rpm, wherein the faster the rotating speed is, the shorter the pitch is. For example, when the spinneret 10 is rotated at 10 rpm, the pitch is about 20 cm; when the spinneret 10 is rotated at 30 rpm the pitch is about 2 cm. It should be particularly noted that the pitch refers to the width of a whole spiral which is measured in parallel to the axis of the hollow fiber. Further, the pitch is inversely proportional to the rotating speed of the needle, and the rotating speed is inversely proportional to the diameter of the needle.

In one embodiment, at least three nozzles 101b are exposed outside of the sleeve 102, wherein the distance d2 is 0 to 1 cm, such that the clogging during the spinning process can be avoided.

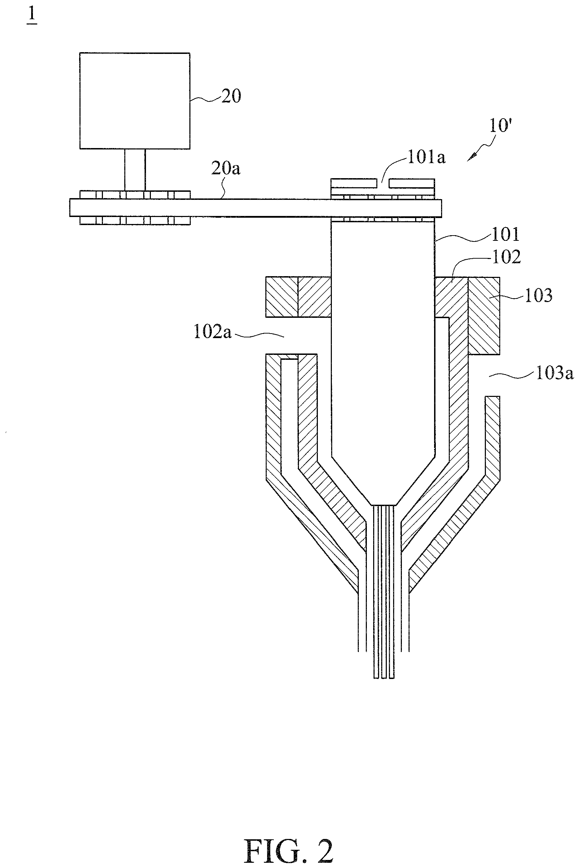

As shown in FIG. 2, another embodiment of the spinneret is demonstrated.

As shown in the figure, the spinneret 10 further comprises a first external member 103 surrounding the sleeve 102, such that a second spinning dope is injected through the feed inlet 103a of the first external member 103 and thereby forming a hollow fiber having a first cladding layer, wherein the first cladding layer enclosed the tubular matrix and exposes the first end and the second end of the tubular matrix.

In an embodiment of the preparation of a multi-channel hollow fiber for adsorption, the weight ratio of the polymer to the solvent in the second spinning dope is from 1: 1 to 1: 8. In another embodiment, the weight ratio of the polymer to the solvent is from 1: 4 to 1: 6.

In addition, in an embodiment of the preparation of a multi-channel hollow fiber for adsorption, when the multi-channel hollow fiber has a layer structure having two layers, the second spinning dope comprises a polymer, or both of a polymer and an adsorbent, but not a conducting material. As such, in the second spinning dope, the content of the polymer is from greater than 20 wt% based on the total weight of the polymer and the adsorbent. In particular, when the adsorbent in the tubular matrix is selected from carbon molecular sieve or activated carbon, the tubular matrix has both functions of electric conductivity and adsorption.

On the other hand, in the embodiment for the preparation of the multi-channel hollow fiber for adsorption, when the multi-channel hollow fiber has a multi-layer structure having more than two layers, the second spinning dope comprises a polymer and a conducting material, and the content of the conducting material is from 20 to 80 wt% based on the total weight of the solid content. If the second spinning dope comprises an adsorbent, the content of the conducting material is 20 to less than 80 wt%, and the content of the adsorbent is from greater than 0 to less than 60 wt%.

In an embodiment of the preparation of a multi-channel hollow fiber for filtration, the weight ratio of the polymer to the solvent in the second spinning dope is from 1: 1 to 1: 8. More specifically, if the multi-channel hollow fiber for filtration contains an organic material, the weight ratio of the polymer to the solvent in the second spinning dope may be 1: 1 to 1: 4. If the multi-channel hollow fiber for filtration contains an inorganic material carried out with sintering, the weight ratio of the polymer to the solvent in the second spinning dope is from 1: 1 to 1: 6. Moreover, in an embodiment of the preparation of a multi-channel hollow fiber for filtration, when the multi-channel hollow fiber for filtration contains an organic material, at least one functional material selected from the group consisting of adsorbent, conducting material and catalytic material can be added into the second spinning dope; and the content of the polymer is from 80 to less than 100 wt%; and the content of the functional material is from greater than 0 to 20 wt%, based on the total weight of the polymer and functional material. If the multi-channel hollow fiber for filtration is an inorganic material carried out with sintering, the content of the polymer is from 5 to 35 wt% based on the total weight of the solid content in the second spinning dope, and the remainder of the second spinning dope is the added inorganic material.

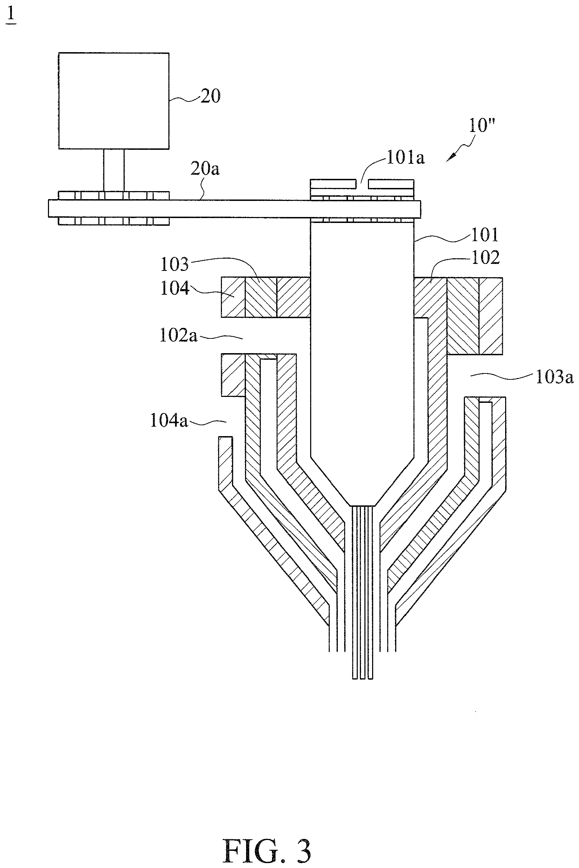

As shown in FIG. 3, another aspect of the spinneret is demonstrated.

As shown in the figure, the spinneret 10 further comprises a second external member 104 surrounding the first external member 103, such that a third spinning dope is injected through the feed inlet 104a of the second external member 104.

In an embodiment of the preparation of a multi-channel hollow fiber for adsorption, the weight ratio of the polymer to the solvent in the third spinning dope is 1: 1 to 1: 8. In another embodiment, the weight ratio of the polymer to the solvent is 1: 4 to 1: 6.

In addition, in an embodiment of the preparation of a multi-channel hollow fiber for adsorption, when the multi-channel hollow fiber has a multi-layer structure having more than two layers, the third spinning dope comprises a polymer.

Also, in one embodiment, the third spinning dope further comprises an adsorbent, and the content of the polymer is 20 to less than 100 wt%, the content of the adsorbent is greater than 0 to 80 wt% based on the total weight of the solid content.

In an embodiment of the preparation of a multi-channel hollow fiber for filtration, the third spinning dope can be provided referring to the formulation of the above second spinning dope.

On the other hand, if it is desired to prepare a multi-channel hollow fiber for filtration which is an inorganic material, the spun hollow fiber can be immersed in water for 24 to 48 hours, and then dried at room temperature, for example, for 2 to 4 days. After that, the spun hollow fiber is placed in a furnace and sintered, for example, at 600°C for 5 hours, followed by heated to 900°C under a rate of 1.5°C/min, then heated to 1100°C under a rate of 2.5°C/min, and then heated to 1500°C under a rate of 1°C/min. Finally, it is sintered at 1500°C for 10 to 12 hours to obtain a hollow fiber in which the content of the inorganic material is 100 wt%.

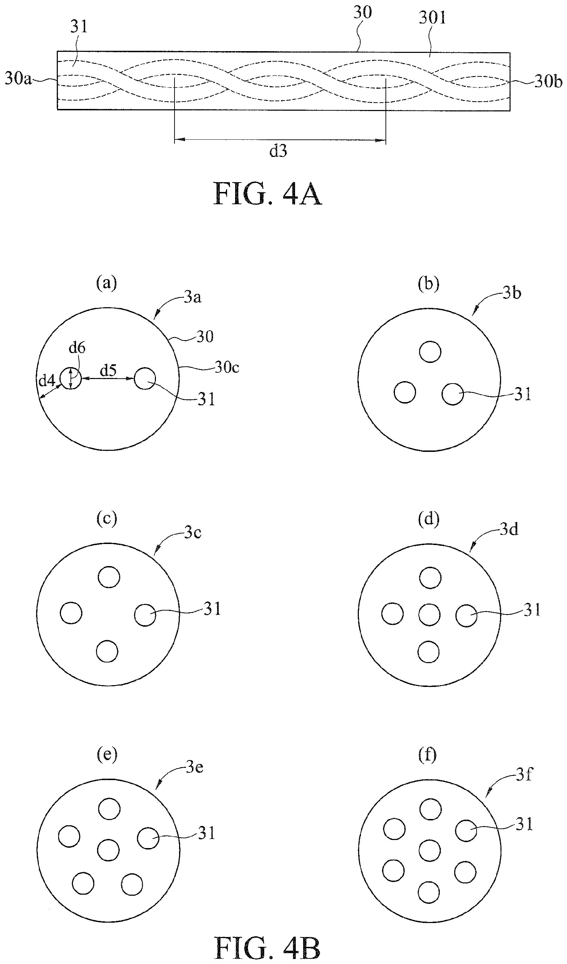

As shown in FIG. 4A, the spiral channels of the hollow fiber 30 which is prepared from the spinneret is analyzed by a schematic cross-sectional view in which hollow fiber 3a having two channels is used as a specific example. It should be emphasized that the cross-sectional view simply illustrates the cross-section of the double channels, wherein the pitch d3 is from 1.0 to 30 cm. In details, the faster the rotating speed of the spinneret 10 is, the shorter the pitch is. For example, when the spinneret 10 is rotated at 10 rpm, the pitch is about 20 cm; when the spinneret 10 is rotated at 30 rpm, the pitch is about 2 cm. It should be particularly noted that, the pitch refers to the width of a whole spiral which is measured in parallel to the axis of the hollow fiber.

As shown in FIG. 4B, the hollow fiber may have 2, 3, 4, 5, 6 or 7 channels, depending on the number of the nozzles 101b. For example, hollow fiber 3a has two channels, hollow fiber 3b has three channels, hollow fiber 3c has four channels, hollow fiber 3d has five channels, hollow fiber 3e has six channels, and hollow fiber 3f has seven channels. Specifically, a plurality of channels as shown by the schematic view of FIG. 4B are not particularly limited and are spiral channels. Take an example of hollow fiber 3a having two channels, distance d4 refers to the shortest distance between the channel 31 and the outer wall 30c of the tubular matrix and it may be 0.5 to 2.5 mm, or 0.1 to 1.0 mm. Further, distance d6 refers to the diameter of the channel and it may be 0.1 to 10 mm, or 0.1 to 2.5 mm, and distance d5 refers to the distance between any two of the adjacent channels 31 and it may be 0.5 to 2.5 mm, or 0.1 to 1.0 mm.

In addition, in another embodiment, the tube body may have a central nozzle. For example, the tube body may have at least four nozzles formed along the axial direction of the tube body, wherein one of these nozzles is in the center of the tube body, and the other nozzles are surrounding the nozzle which is in the center, such that there is a central channel in the tubular matrix of the hollow fiber, as shown in FIGs. 4B(d), (e) and (f).

According to the above manufacturing method, a multi-channel hollow fiber may be provided. The multi-channel hollow fiber 30 as shown in FIG. 4A comprises tubular matrix 301 having a first end 30a and a second end 30b; and a plurality of spiral channels 31 formed through the tubular matrix 301 and extending between the first end 30a and the second end 30b, wherein, the pitch of the spiral channels 31 is 1 to 30 cm.

In one embodiment, the hollow fiber is used for adsorption, the shortest distance between each of the spiral channels and the outer wall of the tubular matrix is 0.5 to 2.5 mm, the diameter of the spiral channel is 0.1 to 10 mm; and the distance between any two of the adjacent spiral channels is 0.5 to 2.5 mm. In addition, the tubular matrix comprises a polymer and an adsorbent, and the content of the adsorbent is 50 to 95 wt% based on the total weight of the tubular matrix.

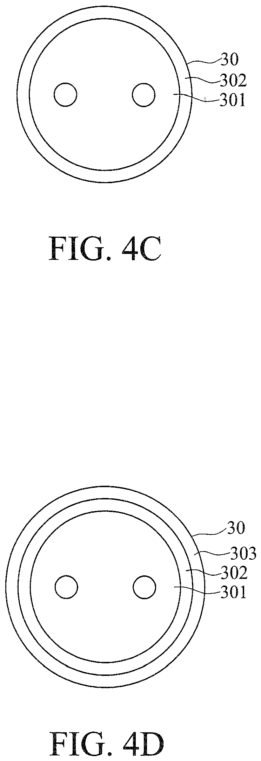

As shown in FIG. 4C, in an embodiment of a hollow fiber for adsorption, the hollow fiber 30 further comprises a first cladding layer 302, which encloses the tubular matrix 301, and exposes the first end 30a and the second end 30b of the tubular matrix 301, wherein, the first cladding layer 302 comprises a polymer, and the content of the polymer is greater than 20 wt% based on the total weight of the first cladding layer.

In another embodiment of a hollow fiber for adsorption, the hollow fiber further comprises a first cladding layer which encloses the tubular matrix and exposes the first end and the second end of the tubular matrix, wherein the first cladding layer comprises a polymer and a conducting material, and the content of the conducting material is from 20 to 80 wt% based on the total weight of the first cladding layer. In this embodiment, the first cladding layer further can comprise an adsorbent, and the content of the conducting material is from 20 to less than 80 wt%, the content of the adsorbent is greater than 0 to less than 60 wt%, based on the total weight of the first cladding layer. In addition, as shown in FIG. 4D, the hollow fiber may further comprises a second cladding layer 303, which encloses the first cladding layer 302, and makes the first cladding layer 302 be located between the tubular matrix 301 and the second cladding layer 303, wherein, the second cladding layer 303 comprises a polymer.

Also, in another embodiment, the second cladding layer 303 further comprises an adsorbent, and the content of the polymer is from 20 wt % to less than 100 wt%, the content of the adsorbent is from greater than 0 to 80 wt%, based on the total weight of the second cladding layer.

In an embodiment of a hollow fiber for filtration, the shortest distance between each of the spiral channels and the outer wall of the tubular matrix is from 0.1 to 1.0 mm, the diameter of the spiral channel is from 0.1 to 2.5 mm; and the distance between any two of the adjacent spiral channels is from 0.1 to1.0 mm. Further, in an aspect of this embodiment, the tubular matrix is an inorganic material, and the inorganic material may comprise an adsorbent. Alternatively, the tubular matrix comprises a polymer, such as the polymer in an amount of 100 wt%; or in addition to the polymer, the tubular matrix further comprises at least one functional material selected from the group consisting of adsorbent, conducting material and catalytic material, and the content of the polymer is from 80 to less than 100 wt%, the content of the functional material is from greater than 0 to 20 wt%, based on the total weight of the tubular matrix.

In an embodiment of a hollow fiber for filtration, at least one cladding layer can be further comprised. The cladding layer encloses the tubular matrix and exposes the first end and the second end of the tubular matrix.

In one embodiment, the tubular matrix comprises a polymer and an adsorbent, and the content of the adsorbent is from 50 to 95 wt% based on the total weight of the tubular matrix. Further, the hollow fiber may comprise a first cladding layer, which encloses the tubular matrix and exposes the first end and the second end of the tubular matrix, wherein the first cladding layer comprises a polymer, and the content of the polymer is from greater than 20 wt% based on the total weight of the first cladding layer.

In another embodiment, the hollow fiber comprises a first cladding layer which encloses the tubular matrix, and exposes the first end and the second end of the tubular matrix, wherein the first cladding layer comprises a polymer and a conducting material, and the content of the conducting material is from 20 to 80 wt% based on the total weight of the first cladding layer. In this embodiment, the first cladding layer further comprises an adsorbent, and the content of the conducting material is from 20 to less than 80 wt%; the content of the adsorbent is from greater than 0 to less than 60 wt%, based on the total weight of the first cladding layer. In addition, in this embodiment, the hollow fiber further comprises a second cladding layer which encloses the first cladding layer in a manner that the first cladding layer is interposed between the tubular matrix and the second cladding layer, wherein the second cladding layer comprises a polymer and further comprises an adsorbent.

In the present disclosure, if the hollow fiber comprises a second cladding layer, and the second cladding layer comprises an adsorbent, the adsorbent is non-conductive. In other words, the adsorbent in the tubular matrix and the first cladding layer is at least one selected from the group consisting of carbon molecular sieve, activated carbon, zeolite A, zeolite X, zeolite Y, high-silica molecular sieve and meso-porous molecular sieve. The adsorbent in the second cladding layer does not comprise carbon molecular sieve or activated carbon.

In addition, as above, the polymer of the present disclosure can be at least one selected from the group consisting of polysulfone, polyethersulfone, polyvinylidene fluoride, polyphenylsulfone, polyacrylonitrile, cellulose acetate, cellulose diacetate, polyimide, polyetherimide, polyamide, polyvinyl acetate, polylactic acid, polyglycolic acid, poly(lacticco-glycolic acid), polycaprolactone, polyvinyl pyrrolidone, ethylene vinyl alcohol, polydimethylsiloxane, polytetrafluoroethylene and cellulose acetate. The polymers in each layer can be the same or different.

The conducting material of the present disclosure is not particularly limited and can be at least one selected from the group consisting of metal oxides, carbon molecular sieve, activated carbon, carbon black and graphite.

### EXAMPLES

### Preparation of hollow fiber as adsorption material

### Preparation Example 1

100 g of PESF was placed in a 1L glass bottle where 500 ml of NMP was then added into. The glass bottle was placed in a drum mixer and stirred at 50 rpm for 12 hours; thereby PESF was completely dissolved and become a mixed solution. Then the mixed solution was placed in a high speed agitator and stirred at 1000 rpm, and then 500 g of HISIV3000 (from Honeywell UOP) was slowly added. After stirring for 6 hours, the mixed solution was placed in a drum mixer and degassed by stirring at 50 rpm for 24 hours. After that, the first spinning dope was formed.

Next, the first spinning dope was poured into a stainless steel pressure vessel. The spinning dope was injected into a spinneret with single needle by 4 bar gas pressure. Meanwhile, the bore fluid was injected into the spinneret under a rate of 4 ml/min. The diameter of the needle is 0.9 mm, the length is 1.0 cm, distance d1 is 1.0 mm, and the shortest distance d2 between the needle and the sleeve is 0.5 mm.

Subsequently, the spinning dope was extruded with bore fluid through the outlet of the sleeve of the spinneret. The hollow fiber was collected and placed in water for 24 hours, and then be dried naturally. After that, a hollow fiber with single channel was formed.

### Preparation Example 2

This manufacturing method was preformed in the same manner as in Preparation Example 1 expect that when the first spinning dope was ready to extrude through the outlet of the sleeve of the spinneret, the drive motor on the spinneret was started, so as to make the spinneret rotate at 20 rpm (a pitch of about 4 cm). After that, the hollow fiber with single spiral channel was formed.

### Preparation Example 3

This manufacturing method was preformed in the same manner as in Preparation Example 1 expect that the spinneret has seven needles, wherein the diameter of the needles is 0.9 mm, the length is 1.0 cm, and the shortest distance between the needles and the sleeve is 0.5 mm, and the distance between each of the seven needles is 1.0 mm. After that, the hollow fiber with seven channels was formed.

### Preparation Example 4

This manufacturing method was preformed in the same manner as in Preparation Example 3 expect that when the first spinning dope was ready to extrude through the outlet of the sleeve of the spinneret, the drive motor on the spinneret was started, so as to make the spinneret rotate at 20 rpm (a pitch of about 4 cm). After that, the hollow fiber with seven spiral channels was formed.

### Preparation Example 5

This manufacturing method was preformed in the same manner as in Preparation Example 1 expect that HISIV3000 was replaced by 13X material (from Honeywell UOP). After that, a hollow fiber with single channel was formed.

### Preparation Example 6

This manufacturing method was preformed in the same manner as in Preparation Example 5 expect that when the first spinning dope was ready to extrude through the outlet of the sleeve of the spinneret, the drive motor on the spinneret was started, so as to make the spinneret rotate at 20 rpm (a pitch of about 4 cm). After that, the hollow fiber with single spiral channel was formed.

### Preparation Example 7

This manufacturing method was preformed in the same manner as in Preparation Example 5 expect that the spinneret has seven needles, wherein the diameter of the needles is 0.9 mm, the length is 1.0 cm, and the shortest distance between the needles and the sleeve is 0.5 mm, and the distance between each of the seven needles is 1.0 mm. After that, the hollow fiber with seven channels was formed.

### Preparation Example 8

This manufacturing method was preformed in the same manner as in Preparation Example 7 expect that when the first spinning dope was ready to extrude through the outlet of the sleeve of the spinneret, the drive motor on the spinneret was started, so as to make the spinneret rotate at 20 rpm (a pitch of about 4 cm). After that, the hollow fiber with seven spiral channels was formed.

### Preparation of hollow fiber having first cladding layer as adsorbed material

### Preparation Example 9

This manufacturing method was preformed in the same manner as in Preparation Example 1 expect that HISIV3000 was replaced by 13X material, so as to obtain a second spinning dope. As shown in FIG. 2, the first spinning dope of Preparation Example 1 and the second spinning dope of this Preparation Example were injected separately to the feed inlet 102a of the first spinning dope and the feed inlet 103a of the second spinning dope. The spinneret has seven needles, wherein the diameter of the needles is 0.9 mm, the length is 1.0 cm, and the shortest distance between the needles and the sleeve is 0.5 mm, and the distance between each of the seven needles is 1.0 mm. After that, the hollow fiber with double layer and seven channels was formed.

### Preparation Example 10

This manufacturing method was preformed in the same manner as in Preparation Example 9 expect that when the first and second spinning dopes were ready to extrude through the outlet of the sleeve of the spinneret, the drive motor on the spinneret was started, so as to make the spinneret rotate at 20 rpm (a pitch of about 4 cm). After that, the hollow fiber with double layer and seven spiral channels was formed.

### Preparation of hollow fiber having first cladding layer and second cladding layer as adsorbed material

### Preparation Example 11

This manufacturing method was preformed in the same manner as in Preparation Example 1 expect that HISIV3000 was replaced by graphite, so as to obtain a second spinning dope. As shown in FIG. 3, the second spinning dope of this Preparation Example was injected to the feed inlet 103a of the second spinning dope, while the spinning dope of the Preparation Example 1 as first spinning dope and third spinning dope were injected separately to the feed inlet 102a of the first spinning dope and the feed inlet 104a of the third spinning dope. The spinneret has seven needles, wherein the diameter of the needles is 0.9 mm, the length is 1.0 cm, and the shortest distance between the needles and the sleeve is 0.5 mm, and the distance between each of the seven needles is 1.0 mm. After that, the hollow fiber with triple layer and seven channels was formed.

### Preparation Example 12

This manufacturing method was preformed in the same manner as in Preparation Example 11 expect that when the first, second and third spinning dopes were ready to extrude through the outlet of the sleeve of the spinneret, the drive motor on the spinneret was started, so as to make the spinneret rotate at 20 rpm (a pitch of about 4 cm). After that, the hollow fiber with triple layer and seven spiral channels was formed.

### Preparation of hollow fiber as filter membrane

### Preparation Example 13

This manufacturing method was preformed in the same manner as in Preparation Example 1 expect that HISIV3000 was replaced by aluminum oxide (from Alfa Aesar), and the spinneret has seven needles, wherein the diameter of the needles is 0.9 mm, the length is 1.0 cm, and the shortest distance between the needles and the sleeve is 0.5 mm, and the distance between each of the seven needles is 1.0 mm, and when the first spinning dope was ready to extrude through the outlet of the sleeve of the spinneret, the drive motor on the spinneret was started, so as to make the spinneret rotate at 20 rpm (a pitch of about 4 cm). After that, a precursor of the inorganic hollow fiber membrane with seven spiral channels was formed. Subsequently, the spun hollow fiber was placed in water for 24 hours. After drying naturally, the spun hollow fiber was heated and sintered in a furnace according to the temperature protocol: heated at 600°C for 5 hours, then heated to 900°C under a rate of 1.5°C/min, then heated to 1100°C under a rate of 2.5°C/min, and then heated to 1500°C under a rate of 1°C/min. After sintering at 1500°C for 10 to 12 hours, an inorganic hollow fiber with seven spiral channels was obtained.

### Preparation Example 14

This manufacturing method was preformed in the same manner as in Preparation Example 13 expect that PESF was replaced by PVDF, and aluminum oxide and sintering process were not required. The diameter of the needles is 0.7 mm, the length is 1.0 cm, and the shortest distance between the needles and the sleeve is 0.5 mm, and the distance between each of the seven needles is 0.5 mm. When the first spinning dope was ready to extrude through the outlet of the sleeve of the spinneret, the drive motor on the spinneret was started, so as to make the spinneret rotate at 20 rpm (a pitch of about 4 cm). Subsequently, the hollow fiber was placed in water for 24 hours and then dried naturally. After that, the hollow fiber with seven spiral channels was formed.

### Preparation of hollow fiber having first cladding layer as filter membrane

### Preparation Example 15

The second spinning dope was prepared in the same manner as in Preparation Example 1 expect that HISIV3000 was replaced by silicon dioxide and silica aerogel in a ratio of 5: 1. As shown in FIG. 2, the first spinning dope of Preparation Example 13 and the second spinning dope of this Preparation Example were injected separately to the feed inlet 102a of the first spinning dope and the feed inlet 103a of the second spinning dope. The spinneret has seven needles, wherein the diameter of the needle is 0.9 mm, the length is 1.0 cm, and the shortest distance between the needles and the sleeve is 0.5 mm, and the distance between each of the seven needles is 1.0 mm. When the first and second spinning dopes were ready to extrude through the outlet of the sleeve of the spinneret, the drive motor on the spinneret was started, so as to make the spinneret rotate at 20 rpm (a pitch of about 4 cm). After that, a spun hollow fiber with seven spiral channels was formed. Subsequently, the hollow fiber was placed in water for 24 hours. After drying naturally, it was heated and sintered in a furnace according to the temperature protocol: heated at 600°C for 5 hours, then heated to 900°C under a rate of 1.5°C/min, then heated to 1100°C under a rate of 2.5°C/min, and then heated to 1500°C under a rate of 1°C/min. After sintering at 1500°C for 10 to 12 hours, an inorganic hollow fiber with double layer and seven spiral channels was obtained.

### Preparation Example 16

This manufacturing method was preformed in the same manner as in Preparation Example 15 expect that aluminum oxide in the first spinning dope was replaced by polytetrafluoroethylene (PTFE), and PESF in the second spinning dope was replaced by PVDF. As shown in FIG. 2, the first spinning dope and the second spinning dope of this Preparation Example were injected separately to the feed inlet 102a of the first spinning dope and the feed inlet 103a of the second spinning dope. The spinneret has seven needles, wherein the diameter of the needle is 0.7 mm, the length is 1.0 cm, and the shortest distance between the needles and the sleeve is 0.5 mm, and the distance between each of the seven needles is 0.5 mm. When the first and second spinning dopes were ready to extrude through the outlet of the sleeve of the spinneret, the drive motor on the spinneret was started, so as to make the spinneret rotate at 20 rpm (a pitch of about 4 cm). After that, the hollow fiber with double layer and seven spiral channels was formed.

The materials and conditions in the above Preparation Examples were recorded in the following Table 1.

**Table 1**

| Preparation Example | first spinning dope | second spinning dope | third spinning dope | the number of channels | spiral channels | sintering |
|---|---|---|---|---|---|---|
| 1 | PESF/HISIV3000 | | | 1 | | |
| 2 | PESF/HISIV3000 | | | 1 | V | |
| 3 | PESF/HISIV3000 | | | 7 | | |
| 4 | PESF/HISIV3000 | | | 7 | V | |
| 5 | PESF/13X | | | 1 | | |
| 6 | PESF/13X | | | 1 | V | |
| 7 | PESF/13X | | | 7 | | |
| 8 | PESF/13X | | | 7 | V | |
| 9 | PESF/HISIV3000 | PESF/13X | | 7 | | |
| 10 | PESF/HISIV3000 | PESF/13X | | 7 | V | |
| 11 | PESF/HISIV3000 | PESF/graphite | PESF/HISIV3000 | 7 | | |
| 12 | PESF/HISIV3000 | PESF/graphite | PESF/HISIV3000 | 7 | V | |
| 13 | PESF/aluminum oxide | | | 7 | V | V |
| 14 | PVDF | | | 7 | V | |
| 15 | PESF/aluminum oxide | PESF/silicon dioxide/silica aerogel | | 7 | V | V |
| 16 | PESF/PTFE | PVDF/silicon dioxide/silica aerogel | | 7 | V | |

### Test Example 1

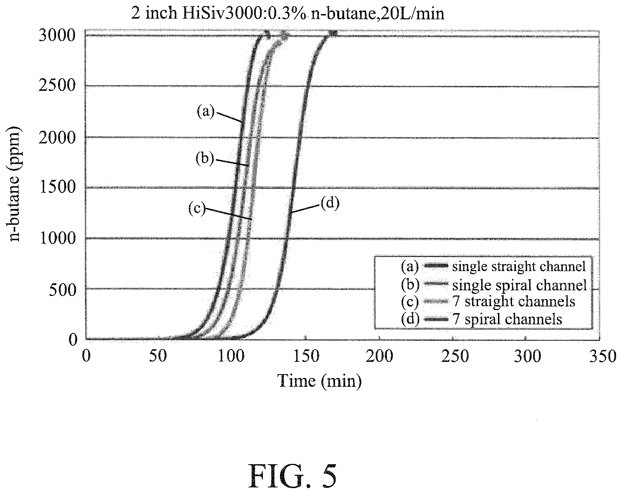

The hollow fibers from Preparation Examples 1 to 4 were used as adsorption material and then subjected to the adsorption test to n-butane (3000ppm, 20L/min). The resulted adsorption breakthrough curve diagram was shown in FIG. 5. As shown in FIG. 5, the hollow fiber with seven spiral channels from Preparation Example 4 has longer adsorption time, increased transmission path and extended contact time of n-butane gas. Therefore, under the condition that the weight of adsorption material, pressure and gas flow rate are the same, the hollow fiber with seven spiral channels from Preparation Example 4 has higher adsorption capacity (breakthrough point) (capacity, g, adsorbate/g, adsorbent %). As shown in the following Table 2, the adsorption efficiency of the hollow fiber with seven spiral channels from Preparation Example 4 is about 10 % higher than that of the hollow fiber with single channel from Preparation Example 1. Moreover, the content of the adsorbent in the hollow fiber with seven spiral channels from Preparation Example 4 can be increased to approximately 87 wt%.

**Table 2**

| | Preparation Example 1 | Preparation Example 2 | Preparation Example 3 | Preparation Example 4 |
|---|---|---|---|---|
| Adsorbent content (wt %) | 80 | 80 | 87.11 | 86.1 |
| Adsorption capacity (breakthrough point) (%) | 4.90 | 5.04 | 5.06 | 5.21 |

### Test Example 2

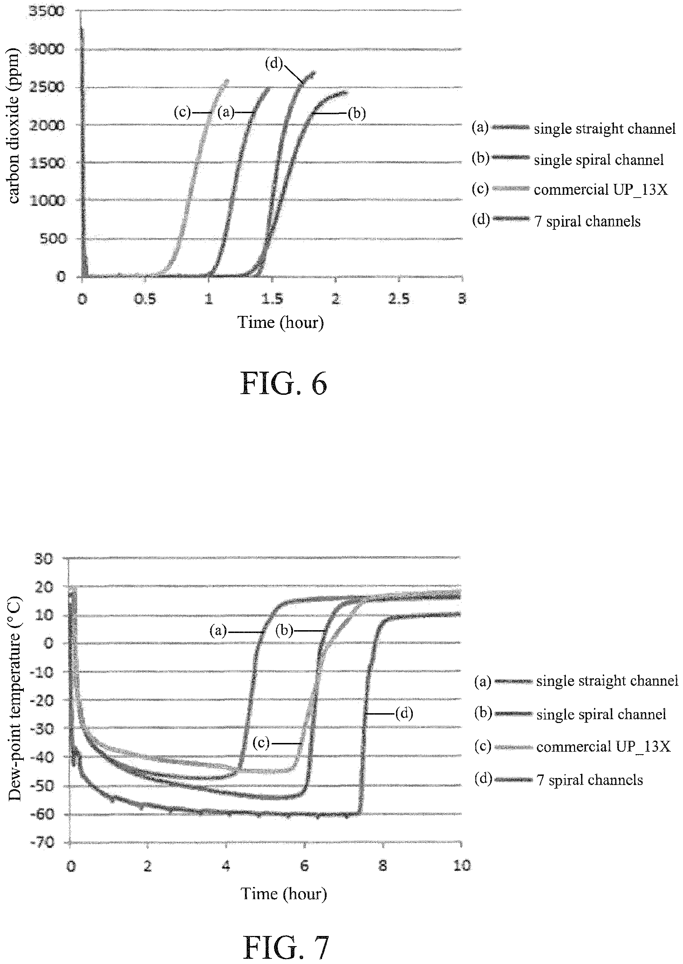

The hollow fibers from Preparation Examples 5, 6 and 8 were used as adsorption material, and then subjected to the adsorption test to carbon dioxide (3000ppm, 1L/min) in comparing with commercial UOP 13X pellets. The resulted adsorption breakthrough curve diagram was shown in FIG. 6. As shown in FIG. 6 and the following Table 3, the adsorption capacity (breakthrough point) of the hollow fiber from Preparation Example 8 is about 150% higher than that of the commercial UOP 13X pellets, and the content of the adsorbent can be increased to 85wt%.

**Table 3**

| | Preparation Example 5 | Preparation Example 6 | Preparation Example 8 | UOP 13X pellets |
|---|---|---|---|---|
| Adsorbent content (wt %) | 80 | 80 | 85.1 | 80 |
| Adsorption capacity (breakthrough point) (%) | 1.10 | 1.35 | 1.80 | 0.67 |

### Test Example 3

The hollow fibers from Preparation Examples 5, 6 and 8 were used as adsorption material, and then subjected to the adsorption test to water vapor (100% RH, 1L/min), in comparing with commercial UOP 13X pellets. The resulted adsorption breakthrough curve diagram was shown in FIG. 7. As shown in FIG. 7, the adsorption efficiency of the hollow fiber from Preparation Example 8 is more excellent than that of the commercial UOP 13X pellets. Further, the hollow fiber from Preparation Example 8 can reduce the moisture content in adsorbed gas to -60°C (dew-point) under a condition without adsorption pressure, and the breakthrough time is up to as long as 7.6 hours, which is 2 to 3 hours longer than that of the commercial UOP 13X pellets.

### Test Example 4

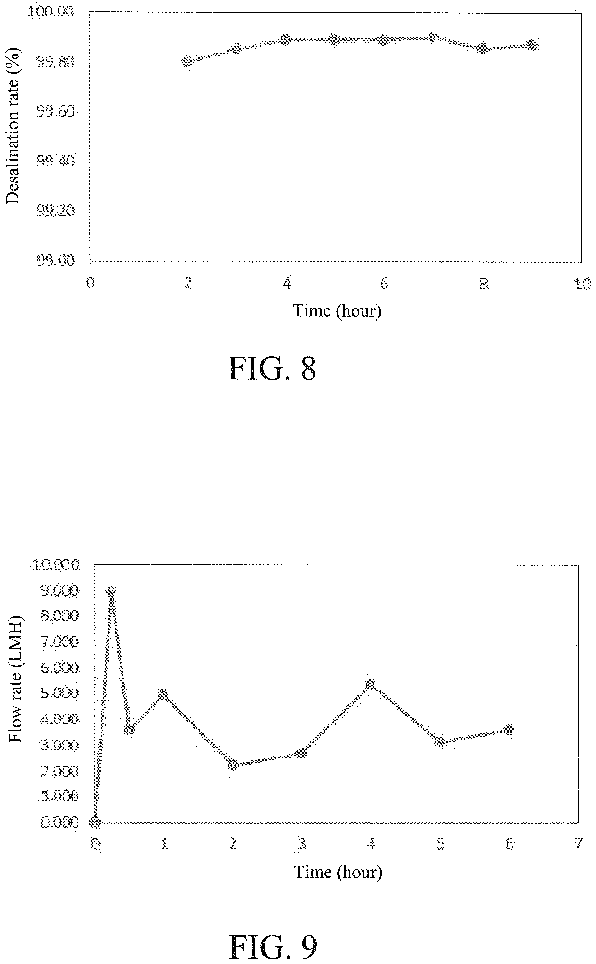

The hollow fiber double-layer membrane with seven spiral channels from Preparation Example 16 was subjected to the desalination test to saline in high concentration (initial electric conductivity in water: 54 ms/cm; temperature difference of water: 40°C). The resulted desalination rates and water production rates were shown in FIG. 8 and FIG. 9. It can be seen that the desalination efficiency of the hollow fiber is excellent, and the desalination rate is >99.9% under a condition without filtration pressure. Also, the hollow fiber can be stably operated for more than 9 hours.

From the above, the hollow fiber having a plurality of channels disclosed in the present disclosure has high adsorption efficiency, when the content of the adsorbent is 50 to 95 wt% based on the total weight of the tubular matrix. Further, compared to the hollow fiber with straight channel, the hollow fiber with spiral channels has higher adsorption efficiency, and the adsorbent content thereof is also higher than the adsorbent content of the hollow fiber with straight channel. Meanwhile, in considering the impact of the factor that the hollow fiber of the present disclosure has a plurality of channels, the hollow fiber still possesses high mechanical strength. Specifically, the mechanical strength of the multi-channel hollow fiber for adsorption can be increased to 80 to 120 Mpa. The mechanical strength of the multi-channel hollow fiber for filtration which contains inorganic materials can be increased to 350 to 450Mpa. The mechanical strength of the multi-channel hollow fiber for filtration which further comprises a polymer can be increased to 30 to 50Mpa.

It will be apparent to those skilled in the art that various modifications and variations can be made to the disclosed embodiments. It is intended that the specification and examples be considered as exemplary only, with a true scope of the disclosure being indicated by the following claims.

## Claims

1. A multi-channel hollow fiber, comprising:
a tubular matrix having a first end and a second end; and
a plurality of spiral channels formed through the tubular matrix and extending between the first end and the second end, wherein a pitch of each of the spiral channels is 1 to 30 cm.

2. The multi-channel hollow fiber of claim 1, which is used for adsorption, and wherein a shortest distance between each of the spiral channel and an outer wall of the tubular matrix is from 0.5 to 2.5 mm, a diameter of the spiral channel is from 0.1 to 10 mm; and a distance between any two adjacent ones of the spiral channels is from 0.5 to 2.5 mm.

3. The multi-channel hollow fiber of claim 1, which is used for filtration, and wherein a shortest distance between each of the spiral channels and an outer wall of the tubular matrix is from 0.1 to 1.0 mm, a diameter of the spiral channel is from 0.1 to 2.5 mm, and a distance between any two adjacent ones of the spiral channels is from 0.1 to 1.0 mm.

4. The multi-channel hollow fiber of claim 3, wherein the tubular matrix is formed from an inorganic material.

5. The multi-channel hollow fiber of claim 3, wherein the tubular matrix comprises a polymer.

6. The multi-channel hollow fiber of claim 5, wherein the tubular matrix further comprises at least one functional material selected from the group consisting of an adsorbent, a conducting material and a catalytic material, and the content of the polymer is from 80 to less than 100 wt% and the content of the functional material is from greater than 0 to 20 wt%, based on the total weight of the tubular matrix.

7. The multi-channel hollow fiber of claim 3, further comprising at least one cladding layer which encloses the tubular matrix and exposes the first end and the second end of the tubular matrix.

8. The multi-channel hollow fiber of claim 2, wherein the tubular matrix comprises a first polymer and a first adsorbent, and the content of the first adsorbent is from 50 to 95 wt% based on the total weight of the tubular matrix.

9. The multi-channel hollow fiber of claim 8, further comprising a first cladding layer which encloses the tubular matrix and exposes the first end and the second end of the tubular matrix, wherein the first cladding layer comprises a second polymer and a second adsorbent, and the content of the second polymer is from greater than 20 to less than 100 wt% and the content of the second adsorbent is from greater than 0 to 80 wt%, based on the total weight of the first cladding layer.

10. The multi-channel hollow fiber of claim 8, further comprising a first cladding layer which encloses the tubular matrix and exposes the first end and the second end of the tubular matrix, wherein the first cladding layer comprises a second polymer and a conducting material, and the content of the conducting material is from 20 to 80 wt% based on the total weight of the first cladding layer.

11. The multi-channel hollow fiber of claim 10, wherein the first cladding layer further comprises a second adsorbent, and the content of the conducting material is from 20 to less than 80 wt% and the content of the second adsorbent is from greater than 0 to less than 60 wt%, based on the total weight of the first cladding layer.

12. The multi-channel hollow fiber of claim 10, further comprising a second cladding layer which encloses the first cladding layer in a manner that the first cladding layer is interposed between the tubular matrix and the second cladding layer, wherein the second cladding layer comprises a third polymer.

13. The multi-channel hollow fiber of claim 12, wherein the second cladding layer further comprises a second adsorbent, and the content of the third polymer is from 20 to less than 100 wt% and the content of the second adsorbent is from greater than 0 to 80 wt%, based on the total weight of the second cladding layer.

14. The multi-channel hollow fiber of claim 9, wherein the first adsorbent of the tubular matrix is at least one selected from the group consisting of carbon molecular sieve and activated carbon, and the second adsorbent of the first cladding layer is at least one selected from the group consisting of zeolite A, zeolite X, zeolite Y, high-silica molecular sieve and meso-porous molecular sieve.

## Patentansprüche

1. Multikanal-Hohlfaser, aufweisend:
eine rohrförmige Matrix mit einem ersten Ende und einem zweiten Ende; und
eine Vielzahl von spiralförmigen Kanälen, die durch die rohrförmige Matrix hindurch gebildet sind und sich zwischen dem ersten Ende und dem zweiten Ende erstrecken, wobei eine Steigungshöhe jedes spiralförmigen Kanals 1 bis 30 cm beträgt.

2. Multikanal-Hohlfaser nach Anspruch 1, die für die Adsorption verwendet wird, wobei ein kürzester Abstand zwischen jedem spiralförmigen Kanal und einer äußeren Wand der rohrförmigen Matrix zwischen 0,5 und 2,5 mm beträgt, und wobei ein Durchmesser des spiralförmigen Kanals zwischen 0,1 und 10 mm beträgt; und wobei ein Abstand zwischen zwei beliebigen benachbarten spiralförmigen Kanälen zwischen 0,5 und 2,5 mm beträgt.

3. Multikanal-Hohlfaser nach Anspruch 1, die zur Filtration verwendet wird, wobei ein kürzester Abstand zwischen jedem spiralförmigen Kanal und einer äußeren Wand der rohrförmigen Matrix zwischen 0,1 und 1,0 mm beträgt, und wobei ein Durchmesser des spiralförmigen Kanals zwischen 0,1 und 2,5 mm beträgt, und wobei ein Abstand zwischen zwei beliebigen benachbarten spiralförmigen Kanälen zwischen 0,1 und 1,0 mm beträgt.

4. Multikanal-Hohlfaser nach Anspruch 3, wobei die rohrförmige Matrix aus einem anorganischen Material gebildet ist.

5. Multikanal-Hohlfaser nach Anspruch 3, wobei die rohrförmige Matrix ein Polymer aufweist

6. Multikanal-Hohlfaser nach Anspruch 5, wobei die rohrförmige Matrix zumindest ein Funktionsmaterial aufweist, das ausgewählt ist aus der Gruppe bestehend aus einem Adsorbens, einem leitfähigen Material und einem katalytischen Material, und wobei der Anteil des Polymers zwischen 80 und weniger als 100 Gew.-% beträgt, und wobei der Anteil des Funktionsmaterials größer als 0 und bis zu 20 Gew.-% basierend auf dem Gesamtgewicht der rohrförmigen Matrix ist.

7. Multikanal-Hohlfaser nach Anspruch 3, des Weiteren aufweisend zumindest eine Mantelschicht, welche die rohrförmige Matrix umschließt und das erste Ende und das zweite Ende der rohrförmigen Matrix freilegt.

8. Multikanal-Hohlfaser nach Anspruch 2, wobei die rohrförmige Matrix ein erstes Polymer und ein erstes Adsorbens aufweist, und wobei der Anteil des ersten Adsorbens zwischen 50 und 95 Gew.-% basierend auf dem Gesamtgewicht der rohrförmigen Matrix beträgt.

9. Multikanal-Hohlfaser nach Anspruch 8, des Weiteren aufweisend eine erste Mantelschicht, welche die rohrförmige Matrix umschließt und das erste Ende und das zweite Ende der rohrförmigen Matrix freilegt, wobei die erste Mantelschicht ein zweites Polymer und ein zweites Adsorbens aufweist, und wobei der Anteil des zweiten Polymers größer als 20 und bis zu weniger als 100 Gew.-% beträgt und der Anteil des zweiten Adsorbens größer als 0 und bis zu 80 Gew.-% basierend auf dem Gesamtgewicht der ersten Mantelschicht beträgt.

10. Multikanal-Hohlfaser nach Anspruch 8, des Weiteren aufweisend eine erste Mantelschicht, welche die rohrförmige Matrix umschließt und das erste Ende und das zweite Ende der rohrförmigen Matrix freilegt, und wobei die erste Mantelschicht ein zweites Polymer und ein leitfähiges Material aufweist, und wobei der Anteil des leitfähigen Materials von 20 bis zu 80 Gew.-% basierend auf dem Gesamtgewicht der ersten Mantelschicht beträgt.

11. Multikanal-Hohlfaser nach Anspruch 10, wobei die erste Mantelschicht des Weiteren ein zweites Adsorbens aufweist, und wobei der Anteil des leitfähigen Materials von 20 bis zu weniger als 80 Gew.-% und der Anteil des zweiten Adsorbens von größer als 0 bis zu weniger als 60 Gew.-% basierend auf dem Gesamtgewicht der ersten Mantelschicht beträgt.

12. Multikanal-Hohlfaser nach Anspruch 10, des Weiteren aufweisend eine zweite Mantelschicht, welche die erste Mantelschicht umschließt, und zwar auf eine Weise, so dass die erste Mantelschicht zwischen der rohrförmigen Matrix und der zweiten Mantelschicht angeordnet ist, und wobei die zweite Mantelschicht ein drittes Polymer aufweist.

13. Multikanal-Hohlfaser nach Anspruch 12, wobei die zweite Mantelschicht des Weiteren ein zweites Adsorbens aufweist, und wobei der Anteil des dritten Polymers von 20 bis zu weniger als 100 Gew.-% und der Anteil des zweiten Adsorbens von größer als 0 bis zu 80 Gew.-% basierend auf dem Gesamtgewicht der zweiten Mantelschicht ist.

14. Multikanal-Hohlfaser nach Anspruch 9, wobei das erste Adsorbens der rohrförmigen Matrix zumindest eines ist, das ausgewählt ist aus der Gruppe bestehend aus einem Kohlenstoffmolekularsieb und aktiviertem Kohlenstoff, und wobei das zweite Adsorbens der ersten Mantelschicht zumindest eines ist, das ausgewählt ist aus der Gruppe bestehend aus Zeolith A, Zeolith X, Zeolith Y, einem Molekularsieb mit hohem Siliziumdioxidanteil und einem mesoporösem Molekularsieb.

## Revendications

1. Fibre creuse multicanal comprenant :
une matrice tubulaire présentant une première extrémité et une seconde extrémité ; et
une pluralité de canaux en spirale formés à travers la matrice tubulaire et s'étendant entre la première extrémité et la seconde extrémité, dans laquelle un pas de chacun des canaux en spirale est de 1 à 30 cm.

2. Fibre creuse multicanal selon la revendication 1, qui est utilisée à des fins d'adsorption, et dans laquelle la distance la plus courte entre chacun des canaux en spirale et une paroi extérieure de la matrice tubulaire est de 0,5 à 2,5 mm ; un diamètre du canal en spirale est de 0,1 à 10 mm ; et une distance entre deux canaux adjacents quelconques des canaux en spirale est de 0,5 à 2,5 mm.

3. Fibre creuse multicanal selon la revendication 1, qui est utilisée à des fins de filtration, et dans laquelle la distance la plus courte entre chacun des canaux en spirale et une paroi extérieure de la matrice tubulaire est de 0,1 à 1,0 mm ; un diamètre du canal en spirale est de 0,1 à 2,5 mm ; et une distance entre deux canaux adjacents quelconques des canaux en spirale est de 0,1 à 1,0 mm.

4. Fibre creuse multicanal selon la revendication 3, dans laquelle la matrice tubulaire est constituée d'un matériau inorganique.

5. Fibre creuse multicanal selon la revendication 3, dans laquelle la matrice tubulaire comprend un polymère.

6. Fibre creuse multicanal selon la revendication 5, dans laquelle la matrice tubulaire comprend en outre au moins un matériau fonctionnel choisi dans le groupe composé d'un adsorbant, d'un matériau conducteur et d'un matériau catalyseur, et la teneur en polymère est de 80 à moins de 100 % en poids et la teneur en matériau fonctionnel est de plus de 0 à 20 % en poids, sur la base du poids total de la matrice tubulaire.

7. Fibre creuse multicanal selon la revendication 3, comprenant en outre au moins une couche de gaine qui entoure la matrice tubulaire et laisse à nu la première extrémité et la seconde extrémité de la matrice tubulaire.

8. Fibre creuse multicanal selon la revendication 2, dans laquelle la matrice tubulaire comprend un premier polymère et un premier adsorbant, et la teneur en premier adsorbant est de 50 à 95 % en poids, sur la base du poids total de la matrice tubulaire.

9. Fibre creuse multicanal selon la revendication 8, comprenant en outre une première couche de gaine qui entoure la matrice tubulaire et laisse à nu la première extrémité et la seconde extrémité de la matrice tubulaire, dans laquelle la première couche de gaine comprend un deuxième polymère et un second adsorbant, et la teneur en deuxième polymère est de plus de 20 à moins de 100 % en poids et la teneur en second adsorbant est de plus de 0 à 80 % en poids, sur la base du poids total de la première couche de gaine.

10. Fibre creuse multicanal selon la revendication 8, comprenant en outre une première couche de gaine qui entoure la matrice tubulaire et laisse à nu la première extrémité et la seconde extrémité de la matrice tubulaire, dans laquelle la première couche de gaine comprend un deuxième polymère et un matériau conducteur, et la teneur en matériau conducteur est de 20 à 80 % en poids, sur la base du poids total de la première couche de gaine.

11. Fibre creuse multicanal selon la revendication 10, dans laquelle la première couche de gaine comprend en outre un second adsorbant, et la teneur en matériau conducteur est de 20 à moins de 80 % en poids, et la teneur en second adsorbant est de plus de 0 à moins de 60 % en poids, sur la base du poids total de la première couche de gaine.

12. Fibre creuse multicanal selon la revendication 10, comprenant en outre une seconde couche de gaine qui entoure la première couche de gaine, de manière que la première couche de gaine soit intercalée entre la matrice tubulaire et la seconde couche de gaine, dans laquelle la seconde couche de gaine comprend un troisième polymère.

13. Fibre creuse multicanal selon la revendication 12, dans laquelle la seconde couche de gaine comprend en outre un second adsorbant, et la teneur en troisième polymère est de 20 à moins de 100 % en poids, et la teneur en second adsorbant est de plus de 0 à 80 % en poids, sur la base du poids total de la seconde couche de gaine.

14. Fibre creuse multicanal selon la revendication 9, dans laquelle le premier adsorbant de la matrice tubulaire est au moins un adsorbant choisi dans le groupe composé d'un tamis moléculaire au carbone et de charbon activé, et le second adsorbant de la première couche de gaine est au moins un adsorbant choisi dans le groupe composé de zéolite A, de zéolite X, de zéolite Y, d'un tamis moléculaire à haute teneur en silice et d'un tamis moléculaire mésoporeux.
